# EUROPÄISCHE PATENTANMELDUNG

(11) **EP 1 199 545 A1**
(43) Veröffentlichungstag der Anmeldung: **24.04.2002**
(21) Anmeldenummer: 01124113.0
(22) Anmeldetag: 10.10.2001
(51) Int. Cl.: G01C 23/00, G08G 5/00

(54) **Verfahren und Anlage zur automatischen Überwachung von Flugfahrzeugen während dem Start oder der Landung**

(30) Priorität: 16.10.2000 CH 20262000
(71) Anmelder: OERLIKON CONTRAVES AG, 8050 Zürich (CH)
(72) Erfinder: Johnson, Roland, 8135 Langnau am Albis (CH)
(74) Vertreter: OK pat AG

(57) **Zusammenfassung**

Verfahren zur automatischen Überwachung von Flugfahrzeugen beim Start oder bei der Landung. Mit Hilfe von einem oder mehreren im Bereich eines Flughafens angeordneten Überwachungsgeräten (**30**) werden Bildaufnahmen des Flugfahrzeugs während des Starts oder der Landung gewonnen. Diese Bildaufnahmen werden in einem Datenspeicher (**32**) gespeichert. Es sind Mittel (**29**) vorhanden, die es dem Überwachungsgerät (**30**) ermöglichen das Flugfahrzeug (**1**) zu erfassen und der Bewegung des Flugfahrzeugs (**1**) zu folgen. Die Bildaufnahmen werden für eine spätere Auswertung in dem Datenspeicher (**32**) gespeichert.

## Beschreibung

Die vorliegende Erfindung betrifft ein Verfahren und eine Anlage zur Überwachung von Flugfahrzeugen während dem Start oder der Landung, gemäss dem Oberbegriff der Patentansprüche **1** und **9**.

Mit zunehmendem Flugverkehr stellt sich vermehrt das Problem, die sogenannte Luftsicherung zu verbessern. Unter Luftsicherung, auch Flugsicherung genannt, versteht man die Gesamtheit der Massnahmen, um die Flüge von Luftfahrzeugen zu sichern. In erster Linie handelt es sich um juristische durch die Luftsicherungsbehörden erlassene Vorschriften, die sich selbstverständlich auch in den technischen Einrichtungen auswirken. Diese Massnahmen beziehen sich vorwiegend auf die Wetterberatung und Streckenplanung, auf die Zuteilung einer sogenannten Luftstrasse unter Berücksichtigung der erlaubten Flughöhen und Start- bzw. Landungszeiten und auf die Überwachung des Flugplans der kontrollierten Flugfahrzeuge. Zur Lösung dieses Aufgabenkomplexes wurde bereits eine beträchtliche Anzahl Systeme entwickelt, die beispielsweise zur Distanzmessung mit dem Zweck, Zusammenstösse der im Blindflug fliegenden Flugzeuge zu vermeiden, zur Durchführung von Starts und Landungen in der Nacht oder bei schlechtem Wetter und zur Herstellung der notwendigen Nachrichtenverbindungen zwischen den verschiedenen Flugzeugen und dem Kontrollturm eines Flughafens dienen.

Es ist nun Aufgabe der vorliegenden Erfindung, einen Beitrag zur Lösung des erwähnten Aufgabenkomplexes zu leisten.

Diese Aufgabe wird in vorteilhafter Weise erfindungsgemäss durch das Verfahren nach Patentanspruch **1** und durch die Anlage nach Patentanspruch **15** gelöst.

Der Start und die Landung sind die kritischsten Flugphasen, da sich hierbei überproportional viele und schwerwiegende Vorkommnisse ereignen, wenn man das auf die gesamthaft zurückgelegte Flugstrecke umrechnet. Durch das erfindungsgemässe Verfahren ergibt sich die Möglichkeit, wenn sich gelegentlich ein aussergewöhnliches Vorkommnis während Start oder Landung ereignen sollte, das Flugfahrzeug im Nachhinein in all seinen externen Einzelheiten genau zu studieren. Auf Grund der ermittelten Beobachtungen können unter Umständen derartige Vorkommnisse für die Zukunft vermieden werden.

Auch kann man mit der erfindungsgemässen Anlage den Hergang und die Folgen eines Vorkommnisses rekonstruieren bzw. untersuchen.

Andere vorteilhafte Ausführungen der Erfindung ergeben sich aus der Beschreibung und den abhängigen Patentansprüchen.

Die Erfindung wird nachfolgend beispielsweise an Hand von Illustrationen näher erläutert. Es zeigt:
**Fig. 1** eine schematische Darstellung der verschiedenen Einrichtungen einer Anlage gemäss der Erfindung;
**Fig. 2A** eine schematische Darstellung einer weiteren Anlage gemäss der Erfindung;
**Fig. 2B** eine schematische Darstellung einer Überwachungsgruppe gemäss der Erfindung; und
**Fig. 2C** eine schematische Darstellung eines aufgezeichneten Videobildes mit Sichtfeld, gemäss der Erfindung.
**Fig. 3** eine schematische Darstellung eines aufgezeichneten Videobildes mit zwei Sichtfeldern, gemäss einer weiteren Ausführungsform der Erfindung;
**Fig. 4** eine schematische Draufsicht einer weiteren Anlage gemäss der Erfindung.

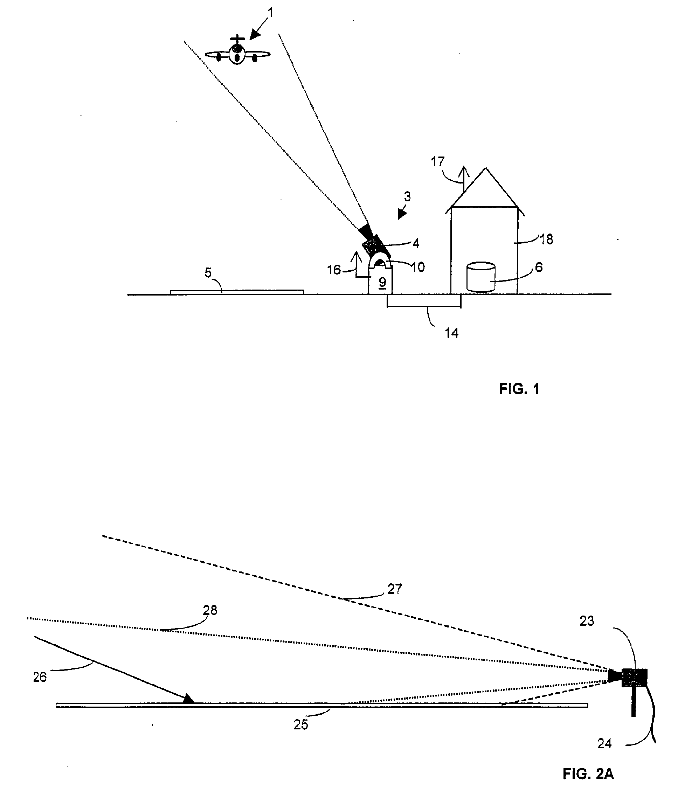

In **Fig. 1** sind als Beispiel ein Flugzeug **1** und eine Anlage mit einer Überwachungsgruppe **3** dargestellt. Die Überwachungsgruppe **3** umfasst vorzugsweise eine Sensoreinrichtung **4,** der ein zu verfolgendes Ziel (z.B. ein startendes Flugzeug **1**) automatisch erfasst und verfolgt. Im gezeigten Beispiel dient eine Kamera (TV-Kamera und/oder Infrarot-Kamera) **4** als Sensoreinrichtung. Diese Kamera **4** verfügt über ein Stellsystem **10**, das eine Bewegung der Kamera **4** ermöglicht. Mit der Überwachungsgruppe **3** kann ein System realisiert werden, bei dem das Flugzeug **1** durch die Kamera **4** automatisch erfasst (Akquisition) und damit die Kamera **4** entsprechend auf das Flugzeug **1** gerichtet ist. Dann folgt die Kamera **4** automatisch den Bewegungen des Flugzeugs **1** (Tracking). Die nötige Verstellbewegung der Kamera **4** wird durch eine entsprechende Software ermittelt und kontrolliert, die sich zum Beispiel im Überwachungsgerät **9** befindet. Man kann diese Funktion auch in Analogtechnik realisieren. Die Software steuert das Stellsystem **10**, um zu gewährleisten, dass sich das Flugzeug **1** im Blickfeld der Kamera **4** befindet. Mit fortschreitender Bewegung des Flugzeugs **1** wird die Ausrichtung der Kamera **4** und eventuell des Zooms durch ein kontrolliertes Verstellen des Stellsystem **10** anpasst. Die Kamera **4** bildet vorzugsweise mit der Software und dem Verstellsystem **10** ein Regelkreis, der ein automatisches Erfassen und Verfolgen des Flugzeugs **1** ermöglicht. Im Beispiel nach **Fig. 1** umfasst die erfindungsgemässe Anlage lediglich eine Überwachungsgruppe **3**, die sich an der rechten Seite einer Piste **5** befindet.

In der dargestellten Ausführungsform der Erfindung können Aufnahmen eines Flugzeugs **1** automatisch registriert und gespeichert werden. Die entsprechenden von der Kamera **4** erzeugten Videosignale können zum Beispiel über ein Kabel **14**, oder über Funk mit Hilfe des Antennenpaares **16** und **17**, an eine entfernte Überwachungsstelle **18** übertragen werden. Die Überwachungsstelle **18** kann vorzugsweise mit einem Videosystem **6** zur Speicherung der Videosignale ausgerüstet sein. In einer weiteren Ausführungsform kann die Übermittlung der Bildinformation von der Kamera **4** zur Überwachungsstelle **18** in Form von digitalen Signalen erfolgen. In einem solchen Fall bietet es sich an, die digitalen Signale mittels eines Computers aufzuzeichnen.
Die Speicherung der Bildsignale kann auch lokal in der Überwachungsgruppe **3** oder in einer Kamera erfolgen.

In den **Fig. 2A** bis **2C** ist eine weitere Ausführungsform der vorliegenden Erfindung dargestellt. In dem gezeigten Beispiel ist eine Kamera **23** (TV-Kamera und/oder Infrarot-Kamera) am Ende einer Landepiste **25** positioniert. Die TV-Kamera **23** ist Teil eines TV-Tracking und/oder Akquisitions-Systems. Damit diese TV-Kamera **23** ein Flugzeug während der Anflugphase und Landung optimal verfolgen kann, ist sie vorzugsweise mit einem automatischen Zoomobjektiv ausgestattet. In **Fig. 2A** ist ein Leitstrahl **26** eingezeichnet, dem die Flugzeuge beim Landeanflug folgen. Das Zoomobjektiv der Kamera **23** ist so dimensioniert, dass ein Flugzeug bereits in der Anflugphase möglichst gross im Blickfeld der Kamera **23** liegt. In dieser Ausgangsstellung hat das Zoomobjektiv einen engen Öffnungswinkel und der Sichtbereich ist zum Beispiel - wie in **Fig. 2A** schematisch angedeutet - durch einen kegelförmigen Bereich **28** begrenzt. In dieser Ausgangsstellung kann das Flugzeug trotz grösserer Entfernung zur Kamera **23** aufgezeichnet werden. Mit der Annäherung des Flugzeugs an die Piste **25** wird das Zoomobjektiv automatisch kontinuierlich verstellt, um das herannahende Flugzeug auch weiterhin im Blickfeld der Kamera **23** bei nahezu konstanter Wiedergabegrösse behalten zu können. Durch die kontinuierliche Verstellung des Zooms wird der Öffnungswinkel der Kamera vergrössert, wie durch den kegelförmigen Bereich **27** dargestellt. Damit können auch herannahende Flugzeuge vollständig im Blickfeld der Kamera **23** erfasst werden. Die Kamera **23** kann über Verbindungsleitungen **24** mit einer Überwachungsgruppe **30** verbunden sein.

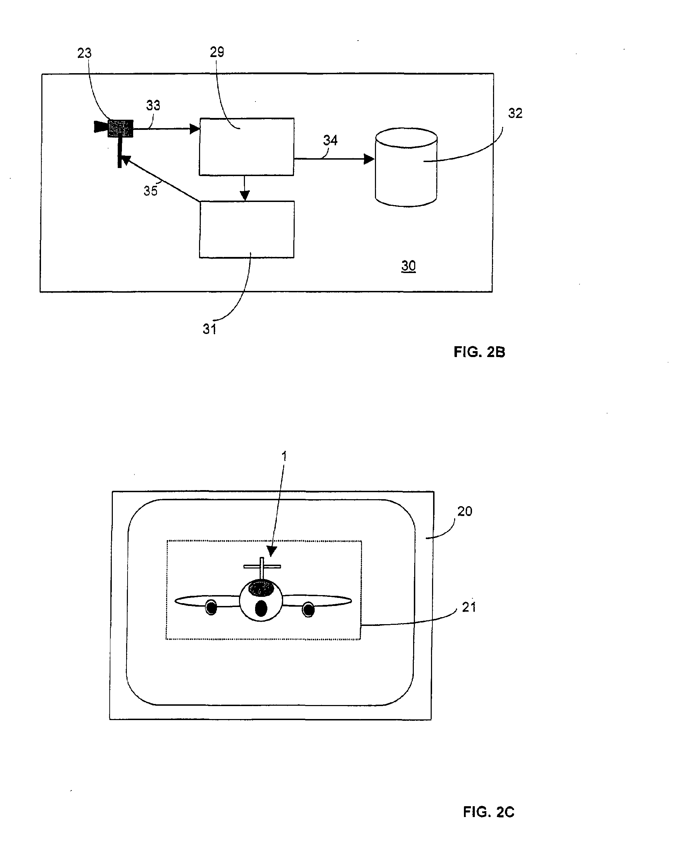

Das Blockschaltbild einer erfindungsgemässen Überwachungsgruppe **30** ist in **Fig. 2B** gezeigt. Die Kamera **23** liefert Bildsignale über eine Verbindung **33** an ein Akquisitions-Systems **29**. Dieses Akquisitions-System **29** wertet die Bildsignale der Kamera **23** aus, um zu ermitteln, ob sich ein Flugzeug innerhalb des Blickfeldes der Kamera **23** befindet. Zu diesem Zweck kann man zum Beispiel ein Sichtfenster **21** (Gate genannt) auf einem Bildschirm **20** definieren, wie in **Fig. 2C** gezeigt. Das Akquisitions-System **29** liefert Signale an ein Regelsystem **31**. Dieses Regelsystem **31** ermittelt aus diesen Signalen eine Stellgrösse, die verwendet wird, um die Positionierung der Kamera **23** und das Zoomobjektiv der Kamera **23** zu steuern. Das Akquisitions-System **29** ermittelt, ob die Abbildung des Flugzeugs **1** innerhalb des Sichtfensters **21** liegt. Nähert sich das Flugzeug **1** der Piste **25**, so würde es im Bild **20** immer grösser werden. Durch das Vergrössern des Öffnungswinkels (Zoom Out) wird die Abbildungsgrösse des Flugzeugs **1** reduziert. Mittels des Video Trackers **29** und des Regelsystems **31** kann ein Regelkreis aufgebaut werden, der die Abbildungsgrösse des Flugzeugs **1** automatisch innerhalb der Grenzen des Sichtfensters **21** hält. Es sei anzumerken, dass die Kamera **23** als Sensor dient, der die Akquisition und das Tracking ermöglicht. Des weiteren kann die Kamera **23** Bildsignale liefern, die aufgezeichnet werden können. Die Kamera **23** wird zusammen mit dem Video Tracker **29** eingesetzt, um das Flugzeug **1** einzufangen (Akquisition) und zu verfolgen (Tracking).

Derartige Video Tracker sind zum Beispiel aus militärischen Anwendungen bekannt. Die militärisch eingesetzten Video Tracker werden manuell oder teilweise automatisch auf ein zu verfolgendes Objekt eingestellt und übernehmen dann die automatische Verfolgung dieses Objekts. Im Zusammenhang mit der vorliegenden Erfindung erfolgt die Akquisition automatisch. Dies ist möglich, da man die Position eines startenden oder landenden Flugzeugs relativ genau kennt. Somit kann man die Kamera **23** in eine Ausgangsposition bringen, in der sie wartet, bis ein Flugzeug im Blickfeld erfasst wird. Von diesem Moment an kann der Video Tracker **29** durch Steuerung der Kamera **23** (durch vergrössern oder verkleinern des Öffnungswinkels, neigen und/oder drehen der Kamera **23**) das Flugzeug automatisch verfolgen.

In Ausführungsformen der Erfindung, wo mehrere Kameras zu Einsatz kommen, die untereinander vernetzt sind, kann der Video Tracker Stellgrössen liefern, anhand derer die anderen Kameras automatisch der Bewegung des Flugzeuges folgen. Der Video Tracker steuert somit die Bewegung und Einstellungen der anderen Kameras.

In dem in **Fig. 2B** gezeigten Beispiel ist der Video Tracker **29** über eine Leitung **34** mit einem Aufzeichnungsmedium **32** (z.B. ein Videosystem) verbunden. Der Video Tracker **29** leitet über diese Leitung **34** Bildsignale an das Aufzeichnungsmedium **32** weiter, wo diese Signale abgespeichert werden.

In einer weiteren Ausführungsform der Erfindung umfasst die Kamera **23** ein Stellsystem, das es ermöglicht die Kamera **23** zu bewegen. Idealerweise wird ein Stellsystem eingesetzt, welches ein Drehen und/oder Neigen der Kamera **23** zulässt. Durch ein solches Stellsystem erhält man weitere Freiheitsgrade, um ein landendes Flugzeug **1** zu erfassen, zu verfolgen und aufzuzeichnen. Ein solches Stellsystem kann mit einem oder mehreren Servomotoren ausgestattet sein.

Üblicherweise wird die Überwachungsgruppe **30** Software umfassen, welche die oben beschriebenen Vorgänge steuert und kontrolliert.

Eine ähnliche Ausführungsform der Erfindung kann an einer Startpiste angebracht werden, um Flugzeuge während der Beschleunigungs- und Startphase zu verfolgen und aufzuzeichnen.

Eine weitere Ausführungsform der Erfindung kann eine TV-Kamera und eine Infrarot-Kamera umfassen. Damit kann man unter anderem auch bei widrigen Sichtverhältnissen und im Dunklen den Start oder das Landen eines Flugzeugs erfassen und aufzeichnen. Die beiden Kameras können auch mit dem Video Tracker verknüpft werden.

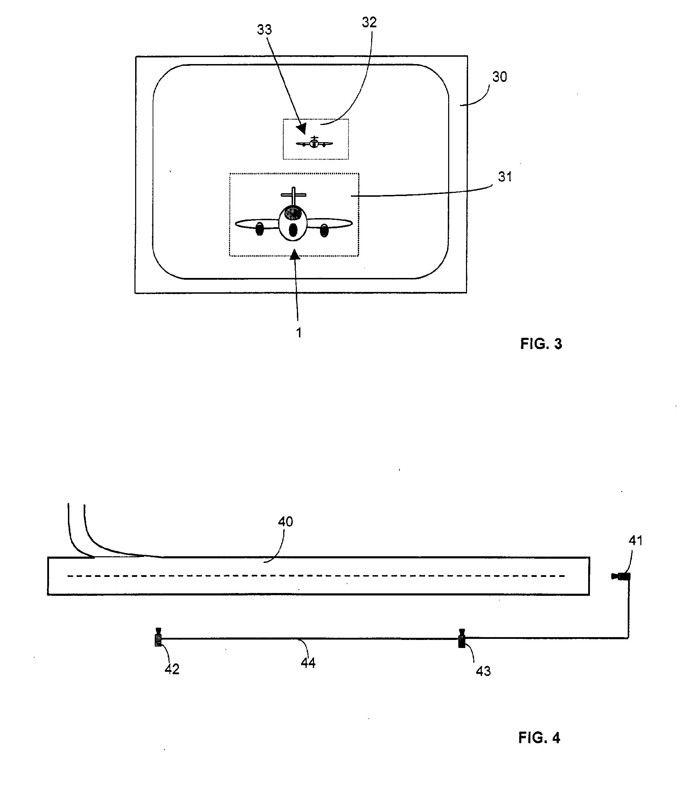

Die Überwachungsgruppe kann derart ausgeführt sein, dass mehr als ein Sichtfenster (Gate) im Bild definiert werden können. Ein Beispiel ist in **Fig. 3** schematisch dargestellt. Im gezeigten Beispiel arbeitet das System mit zwei Sichtfenstern **31** und **32**. Auf dem Bildschirm **30** sind zwei Flugzeuge **1** und **33** sichtbar, die sich nacheinander einer Landebahn nähern. Das erste Sichtfenster **31** ist grösser als das zweite Sichtfenster **32** und erfasst im gezeigten Beispiel dasjenige Flugzeug **1**, das sich in der Endphase des Landeanfluges befindet. Die Anlage kann derart ausgeführt sein, das ein automatisches Umschalten auf das zweite Sichtfenster **32** möglich ist. Ein solches System ermöglicht den schnellen automatischen Wechsel auf ein anderes Flugzeug **33**.

Eine Überwachungsgruppe kann durch weitere Kameras und/oder Sensoren ergänzt werden, die z.B. an der Seite der Piste eingerichtet sind. Die Überwachungsgruppe kann auch durch eine Übersichtskamera ergänzt werden, die sich an einer geeigneten Stelle im Flughafenbereich, beispielsweise am Kontrollturm, befindet.

Eine erfindungsgemässe Anlage kann zusätzlich eine Kamera umfassen, die den Bereich der Landepiste überwacht, in dem Flugzeuge üblicherweise aufsetzen.

Im Allgemeinen kann eine Anlage gemäss der vorliegenden Erfindung zwei oder mehrere (vorzugsweise rechnergesteuerte) Überwachungsgruppen oder eine Überwachungsgruppen mit mehreren Kameras umfassen, die sich an geeigneten Stellen im Umfeld eines Flughafens befinden. Eine solche Anordnung ist in **Fig. 4** schematisch dargestellt. In der **Fig. 4** ist eine Startpiste **40** gezeigt an deren Ende sich eine Kamera **41** befindet. Diese Kamera ist über Leitungen **44** mit zwei weiteren Kameras **42** und **43** verknüpft. Die Kameras **41**, **42**, und **43** sind mit einem Video Tracker verbunden (nicht in **Fig. 4** dargestellt). Analog zu den vorhergehenden Ausführungsformen, ist der Aufbau derart ausgestaltet, das ein Flugzeug während dem Start automatisch erfasst, verfolgt und aufgezeichnet werden kann.

Um den Aufzeichnungsbeginn, bzw. das Ende der Aufzeichnung, kontrollieren zu können, kann man spezielle Sensoren einsetzen. Man kann z.B. mittels Induktionsschleifen in der Piste detektieren, ob ein Flugzeug nach erfolgreicher Landung die Piste verlässt, um Richtung Parkposition zu rollen. Dabei überfährt das Flugzeug die Induktionsschleife und die Aufzeichnung der Bilder wird beendet. Zu diesem Zweck können auch Lichtschranken und andere Mittel eingesetzt werden. Analoge Mittel kann man einsetzen, um den Aufzeichnungsbeginn bei einem zur Startposition rollenden Flugzeug zu bestimmen.

Nach erfolgtem Start kann die Aufzeichnung zum Beispiel beendet werden, sobald die Übergabe von der Bodenüberwachung an die Flugraumüberwachung erfolgt. Zu diesem Zweck kann die erfindungsgemässe Anlage z.B. ein Steuersignal aus dem Kontrollturm des Flughafens erhalten.

Die Speicherung der Bildinformation geschieht vorzugsweise endlos, das heisst, dass diese Bildsignale nach einer vorbestimmten Zeit T1, beispielsweise fortwährend nach einer normal erfolgten Landung oder nach einer vorbestimmten Anzahl Stunden oder Tagen überschrieben werden. Neben einer solchen automatischen Löschung der Bildsignale kann zusätzlich auch eine manuelle Löschung erfolgen. In der Überwachungszentrale kann auch ein Monitor **20** vorhanden sein, um die registrierten bzw. gespeicherten Szenen wiederholt zu beobachten und zu studieren. Eine Löschung der Startphase soll aber frühestens nach der Landung des Flugzeugs an seinem Zielort erfolgen.

Die Aufnahmen der Überwachungsgruppe können in einem Datenspeicher (Videokassette, Computerfestplatte, optischen Speichermedien, usw.) gespeichert werden.

In einer weiteren Ausgestaltung der Erfindung ist der Video Tracker **29**, derart ausgebildet, dass er nach Empfang eines ungewöhnlichen Bildmusters ein Meldesignal liefert. Das System kann dann zum Beispiel den Befehl geben, die Aufnahmen während einer Zeitspanne vor und nach diesem Meldesignal nicht mehr zu löschen, sondern sie gesondert zu behandeln. Ein solches Meldesignal kann auch durch ein besonders helles Bild in einer der Kameras erzeugt werden. Zu diesem Zweck kann z.B. die Lichtintensität ermittelt und mit einem Schwellwert verglichen werden.

Die vorliegende Erfindung kann vorteilhafterweise eingesetzt werden, um problematische Vorkommnisse (Startabbruch, Triebwerk- oder Fahrwerkprobleme, Unfälle, etc.) zu analysieren. Eine solche Analyse kann dazu beitragen, den Flugverkehr sicherer zu gestalten, da man aus der aufgezeichneten Information Lehren ziehen kann. Auch kann eine Aufzeichnung verwendet werden, um einen Start oder eine Landung zu untersuchen. Damit ist es zum Beispiel möglich, den Hergang eines Vorkommnisses relativ schnell und neutral zu beurteilen, insbesondere wenn man gleichzeitig auch die Information des Flightrecorders und des Voicerecorders aus dem entsprechenden Flugzeug auswertet.

Das erfindungsgemässe System kann softwaremässig so ausgestattet sein, dass der Video Tracker zwei oder mehr Gates verarbeiten kann, wobei jedes dieser Gates einem Flugzeug zugeordnet wird. In einer weiteren Ausführungsform kann der Video Tracker automatisch ermitteln, welches der Gates Vorrang hat vor den anderen Gates. Dieses Gate wird als das bestimmende Gate bezeichnet. Damit kann ein Flugzeug erfasst und verfolgt werden, obwohl bereits ein weiteres Flugzeug detektiert wurde. Sind mehrere Kameras vorhanden, so wird diesen Kameras Steuerinformation geliefert, damit diese dem Flugzeug folgen können, dass in dem bestimmenden Gate eingefangen wurde.

Das erfindungsgemässe System kann durch einen Zusatz ausgebaut werden, der es erlaubt, die Bildinformation, die das Akqusitions-System einfängt auszuwerten, um im gesamten Bildbereich nach vorbestimmten Silhouetten oder Mustern zu suchen. Dieser Zusatz ermöglich es, nach bestimmten Flugzeugen zu suchen, indem man nach Merkmalen in der Bildinformation sucht, die das Flugzeug charakterisieren. Dadurch kann verhindert werden, das die erfindungsgemässe Anlage auf Falschziele aufschaltet (z.B. Vögel). Hierzu wird die Bildinformation vorzugsweise digitalisiert und dann verarbeitet. Man kann diesen Zusatz aber auch dazu einsetzten, dass man von einem Flugzeug, das einmal erfasst wurde, gewisse charakterisierende Bildmerkmale zwischenspeichert. Anhand dieser zwischengespeicherten Information und unter Zuhilfenahme von Bewegungsinformation, kann der Video Tracker dem Flugzeug weiter folgen, auch wenn es momentan zum Beispiel durch eine Wolke oder andere Hindernisse abgedeckt wird.

Gemäss Erfindung kann die Anlage automatisch aufgeschaltet werden, sobald ein Flugzeug erfasst wurde.

Vorzugsweise ist die Grösse des Video Tracker Gates variable. Der Video Tracker führt die Grösse und/oder Position automatisch nach, um das erfasste Flugzeug optimal verfolgen zu können.

Die Bildsignale, die der Video Tracker liefert, werden vorzugsweise gefiltert und digitalisiert. Dann werden die digitalisierten Daten eine bildverarbeitenden Einheit (z.B. in Form eines Computers) zugeführt. Die bildverarbeitenden Einheit extrahiert Zieldaten anhand derer die Zielverfolgung (tracking) erfolgen kann.

In einer weiteren Ausführungsform weist der Video Tracker ein erstes Gate auf, das zum Beispiel auf den Leitstrahl eines Flughafens gerichtet sein kann, um Flugzeuge zu erfassen, die den Flughafen entlang des Leitstrahles anfliegen. Das Gate folgt unmittelbar den Bewegungen und Schwankungen des Flugzeugs. Die Kamera hingegen folgt langsam der Gatebewegung, um das Gate möglichst in der Bildmitte zu halten. Kleine Bewegungen des Flugzeugs werden durch eine Bewegung des Gates eingefangen, ohne dass sich die Kamera bewegen muss. Ein weiteres Gate kann vorgesehen werden, das in der Lage ist Flugzeuge zu erfassen und zu verfolgen, die sich nicht entlang des Leitstrahls bewegen.

Aus Gründen des Datenschutzes kann die erfindungsgemässe Anlage derart ausgeführt werden, dass nur berechtigte Personen, z.B. von einer anerkannten Aufsichtsbehörde, Zugang zu den Aufzeichnungen erhalten.

In einer weiteren Ausführungsform umfasst die Anlage ein oder mehrere Mikrofone, damit das Überwachungsgerät Tonsignale erfassen und auswerten kann. Des weiteren kann die Anlage mit die beweglichen Kameras ausgestattet sein, die sich um 2 oder mehr Freiheitsgrade bewegen können. Gemäss einer weiteren Ausführungsform können die Bildsignale mehrere der Kameras aufgezeichnet werden. Die Überwachungsanlage kann auch erst aufgeschaltet werden, wenn das Akquisitions-System ein Flugzeug erkannt hat.

Zur besseren Auswertung der Aufzeichnungen kann gleichzeitig zum Videobild ein Zeitsignal, z.B. die GMT-Zeit und eventuell das Datum, erfasst werden.

Die erfindungsgemässe Anlage kann entweder fest montiert werden, oder sie kann als bewegliche Einrichtung ausgeführt werden. Eine solche bewegliche Ausführungsform ist besonders für den militärischen Einsatz oder für den temporären Einsatz geeignet.

Eine Anlage nach der vorliegenden Erfindung kann sowohl im Bereich eines Flugplatzes oder Flughafens, als auch zum Beispiel auf einem Flugzeugträger zur Anwendung kommen.

## Patentansprüche

1. Verfahren zur Überwachung von Flugfahrzeugen, **dadurch gekennzeichnet, dass** die Überwachung mit einem im Bereich einer Start- bzw. Landebahn angeordneten Überwachungsgerät (**3**; **23**, **30**) ausgeführt wird, das einen Akqusitions-System umfasst, wobei die folgenden Schritte ausgeführt werden:
- Suchen von Bildinformation eines Flugfahrzeugs (**1**) während dem Abflug oder der Landung,
- automatisches Erfassen des Flugfahrzeugs (**1**) durch Verarbeitung der Bildinformation,
- automatisches Verfolgen der Bewegung des erfassten Flugfahrzeugs (**1**) durch Verarbeitung der Bildinformation, und
- Speichern der Bildinformation in einem Speichermedium (**6**; **32**).

2. Verfahren nach Anspruch **1**, **dadurch gekennzeichnet, dass** das Überwachungsgerät (**3**) einen separaten Sensor erhält, welcher Information über die Position des Flugfahrzeugs (**1**) ermittelt oder erfasst, und diese an das Überwachungsgerät (**3**; **23**, **30**) weiter leitet, um dieses automatisch der Bewegung des Flugfahrzeugs (**1**) folgen zu lassen.

3. Verfahren nach Anspruch **1** oder **2**, **dadurch gekennzeichnet, dass** ein Videosystem oder ein Computersystem als Speichermedium dient.

4. Verfahren nach einem der Ansprüche **1** bis **3**, **dadurch gekennzeichnet, dass** das Überwachungsgerät (**30**) eine Kamera (**23**), vorzugsweise eine TV-Kamera und/oder eine Infrarot-Kamera, umfasst.

5. Verfahren nach Anspruch **4**, **dadurch gekennzeichnet, dass** die Kamera (**23**) ein automatisch steuerbares Zoomobjektiv umfasst, dessen Öffnungswinkel verstellbar ist.

6. Verfahren nach einem der Ansprüche **1** bis **5**, **dadurch gekennzeichnet, dass** das Akquisitions-System (**29**) die Bildinformation verarbeitet, um das Flugfahrzeug (**1**) in einem Überwachungsraum des Überwachungsgeräts (**30**) zu halten.

7. Verfahren nach Anspruch **6**, **dadurch gekennzeichnet, dass** das Akquisitions-System (**29**) ein Stellsignal liefert, um damit das Überwachungsgerät (**30**) zu steuern.

8. Verfahren nach Anspruch **6** oder **7, dadurch gekennzeichnet, dass** das Akquisitions-System (**29**) beim Erkennen eines ungewöhnlichen Bildmusters ein Meldesignal liefert.

9. Verfahren nach einem der vorhergehenden Ansprüche, **dadurch gekennzeichnet, dass** das Überwachungsgerät (**30**) Signale an weitere bewegliche Kameras liefert, um diese weiteren Kameras automatisch der Bewegung des Flugfahrzeugs (**1**) folgen zu lassen.

10. Verfahren nach einem der vorhergehenden Ansprüche, **dadurch gekennzeichnet, dass** das Überwachungsgerät (**30**) Tonsignale erfasst und auswertet.

11. Verfahren nach Anspruch **9, dadurch gekennzeichnet, dass** die beweglichen Kameras um 2 oder mehr Freiheitsgrade bewegbar sind.

12. Verfahren nach Anspruch **9**, **dadurch gekennzeichnet, dass** die Bildsignale mehrere der beweglichen Kameras aufgezeichnet werden.

13. Verfahren nach einem der vorhergehenden Ansprüche, **dadurch gekennzeichnet, dass** das Überwachungsgerät (**30**) die Bildinformation verarbeitet, um zu verhindern, dass Falschziele verfolgt werden.

14. Verfahren nach einem der vorhergehenden Ansprüche, **dadurch gekennzeichnet, dass** das Überwachungsgerät (**30**) die Bildinformation verarbeitet, um erst aufzuschalten wenn das Akquisitions-System ein Flugzeug erkannt hat.

15. Anlage zur Überwachung von Flugfahrzeugen beim Start und/oder bei der Landung auf einer Start- bzw. Landebahn, **dadurch gekennzeichnet, dass** im Bereich der Start- bzw. Landebahn (**5**; **25**) ein Überwachungsgerät (**3**; **23**, **30**) angeordnet ist, das ein Akquisitions-System und ein Speichermedium (**6**; **32**) aufweist, wobei die Anlage Bildinformation bereit stellt und auswertet, um anhand der Bildinformation ein Flugfahrzeug (**1**) zu suchen, das Flugfahrzeug (**1**) automatisch zu erfassen, der Bewegung des Flugfahrzeugs (**1**) automatisch zu folgen, und um dabei die Bildinformation, die beim automatischen Verfolgen des Flugfahrzeugs (**1**) gewonnen wird, in dem Speichermedium (**6**; **32**) zu speichern.

16. Anlage nach Anspruch **15**, **dadurch gekennzeichnet, dass** die Anlage einen separaten Sensor aufweist, der Signale über die Position des Flugfahrzeugs (**1**) liefert, um das Überwachungsgerät (**3**) nach Massgabe dieser Signale zu steuern.

17. Anlage nach einem der Ansprüche **15** oder **16**, **dadurch gekennzeichnet, dass** sie mehrere Überwachungsgeräte (**3**) und/oder Kameras (**41, 42, 43**) umfasst, die miteinander verknüpft sind und durch Signale des Akquisitions-Systems (**29**) bewegbar sind.

18. Anlage nach Anspruch **15**, **16** oder **17**, **dadurch gekennzeichnet, dass** ein Videosystem oder ein Computersystem als Speichermedium (**6**; **32**) dient.

19. Anlage nach einem der Ansprüche **15** bis **18**, **dadurch gekennzeichnet, dass** das Überwachungsgerät (**30**) eine Kamera (**23**), vorzugsweise eine TV-Kamera und/oder eine Infrarot-Kamera, umfasst.

20. Anlage nach Anspruch **19**, **dadurch gekennzeichnet, dass** die Kamera (**23**) ein Zoomobjektiv umfasst, dessen Öffnungswinkel automatisch verstellbar ist.

21. Anlage nach einem der Ansprüche **15** bis **20**, **dadurch gekennzeichnet, dass** das Akquisitions-System (**29**) die Bildinformation verarbeitet, um das Flugfahrzeug (**1**) in einem vorbestimmten Überwachungsraum (**21**) des Überwachungsgeräts (**30**) zu halten .

22. Anlage nach einem der Ansprüche **15** bis **21**, **dadurch gekennzeichnet, dass** sie ausgebildet ist, um periphere Hilfsdaten, wie Datum und/oder Uhrzeit, zu speichern.

23. Anlage nach einem der Ansprüche **15** bis **22**, **dadurch gekennzeichnet, dass** sie Mittel zum automatischen Anschalten und/oder zum Abschalten umfasst, wobei diese Mittel von dem Flugfahrzeug (**1**) direkt oder indirekt auslösbar sind.

24. Anlage nach einem der Ansprüche **15** bis **23**, **dadurch gekennzeichnet, dass** sie entweder im Bereich eines Flughafens, eines Flugplatzes, oder auf einem Flugzeugträger installiert ist.

25. Anlage nach einem der Ansprüche **15** bis **24**, **dadurch gekennzeichnet, dass** das Überwachungsgerät (**30**) Tonsignale erfasst und auswertet.

26. Anlage nach Anspruch **17**, **dadurch gekennzeichnet, dass** die beweglichen Kameras um 2 oder mehr Freiheitsgrade bewegbar sind.

27. Anlage nach Anspruch **17**, **dadurch gekennzeichnet, dass** die Bildsignale mehrere der beweglichen Kameras aufgezeichnet werden.

28. Anlage nach einem der Ansprüche **15** bis **27**, **dadurch gekennzeichnet, dass** das Überwachungsgerät (**30**) die Bildinformation verarbeitet, um zu verhindern, dass Falschziele verfolgt werden.

29. Anlage nach einem der Ansprüche **15** bis **28**, **dadurch gekennzeichnet, dass** das Überwachungsgerät (**30**) die Bildinformation verarbeitet, um erst aufzuschalten wenn das Akquisitions-System ein Flugzeug erkannt hat.
